# EUROPÄISCHE PATENTANMELDUNG

(11) **EP 4 686 852 A1**
(43) Veröffentlichungstag der Anmeldung: **04.02.2026**
(21) Anmeldenummer: 24192249.1
(22) Anmeldetag: 01.08.2024
(51) Int. Cl.: F16C 35/077

(54) **LAGERANORDNUNG MIT ELEKTRISCH ISOLIERENDEM ISOLATIONSTEIL**

(71) Anmelder: Flender GmbH, 46395 Bocholt (DE)
(72) Erfinder: FEILHUBER-SEIDL, Stefan, 46395 Bocholt (DE); STERKEL, Alexander, 46395 Bocholt (DE); ORTMEIER, Günther, 46395 Bocholt (DE); HRASKA, Lorenz, 46395 Bocholt (DE)
(74) Vertreter: Michalski Hüttermann & Partner Patentanwälte mbB

(57) **Zusammenfassung**

Lageranordnung 10 für einen um eine Drehachse A_{D} drehbaren Rotorläufer einer elektrischen Maschine, umfassend ein Nabenelement 12, ein über eine Lagereinheit 14 gegenüber dem Nabenelement 12 um die Drehachse A_{D} drehbar gehaltenes Wellenelement 16, wobei das Nabenelement 12 mehrteilig mit einem ersten Nabenteil 18 und einem zweiten Nabenteil 20 ausgeführt ist und ein aus einer Vergussmasse hergestelltes elektrisch isolierendes Isolationsteil 22 das erste und das zweite Nabenteil 18, 20 miteinander verbindet und wobei einander zugewandte Umfangsflächen 24, 26 des ersten und des zweiten Nabenteils 18, 20 einen zueinander im Wesentlichen komplementären Oberflächenverlauf ausbilden.

## Beschreibung

Die Erfindung betrifft eine Lageranordnung für einen um eine Drehachse A_{D} drehbaren Rotorläufer einer elektrischen Maschine, mit einem Nabenelement, einem über eine Lagereinheit gegenüber dem Nabenelement um die Drehachse A_{D} drehbar gehaltenes Wellenelement, wobei das Nabenelement mehrteilig mit einem ersten Nabenteil und einem zweiten Nabenteil ausgeführt ist und ein aus einer Vergussmasse hergestelltes elektrisch isolierendes Isolationsteil das erste und das zweite Nabenteil miteinander verbindet.

Bei Generatoren und Elektromotoren, müssen bei manchen Anwendungen die Lagereinheiten zwischen Wellenelement und der gehäuseseitigen Lageraufname elektrisch isoliert werden, damit sie durch Elektroerosion, die durch den zwischen den Wälzkörpern und den Lagerringen fließenden Strom verursacht werden kann, nicht beschädigt werden. Es sind verschiedene Maßnahmen bekannt die Lagereinheiten elektrisch zu isolieren. Zunächst ist es möglich, unmittelbar auf das Wellenelement eine isolierende Keramikschicht aufzubringen. Alternativ kann eine keramische Beschichtung der Wälzkörper oder der Laufbahnen der Lagereinheiten erfolgen. Das Aufbringen keramischer Beschichtungen erfordert Vorkenntnisse und ist technisch aufwendig. Schließlich sind geschraubte, geklemmte oder geklebte Isolationsteile zu nennen, die gehäuseseitig der Lagereinheiten positioniert werden und die ein Teil der Nabe sind, hierfür allerdings aufwendig vorgefertigt und in die Maßketten eingepasst werden müssen. Es besteht ein ständiges Bedürfnis die elektrische Isolation derartiger Lagereinheiten zu vereinfachen.

Es ist die Aufgabe der Erfindung Maßnahmen aufzuzeigen, die die elektrische Isolation derartiger Lagereinheiten vereinfachen.

Die Lösung der Aufgabe erfolgt durch eine Lageranordnung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Lageranordnung für einen um eine Drehachse A_{D} drehbaren Rotorläufer einer elektrischen Maschine, umfassend ein Nabenelement, ein über eine Lagereinheit gegenüber dem Nabenelement um die Drehachse A_{D} drehbar gehaltenes Wellenelement, wobei das Nabenelement mehrteilig mit einem ersten Nabenteil und einem zweiten Nabenteil ausgeführt ist und ein aus einer Vergussmasse hergestelltes elektrisch isolierendes Isolationsteil das erste und das zweite Nabenteil miteinander verbindet und wobei einander zugewandte Umfangsflächen des ersten und des zweiten Nabenteils einen zueinander im Wesentlichen komplementären Oberflächenverlauf ausbilden.

Die beiden Oberflächenverläufe müssen nicht in einem streng geometrischen Sinne komplementär zueinander sein. Es wird als ausreichend erachtet, wenn sich der Verlauf der einen Oberfläche grundsätzlich gegenläufig in dem Verlauf der anderen Oberfläche wiederfindet. Die Paarung aus den Oberflächen ist derart gestaltet, dass das einsitzende und aus einer Vergussmasse hergestellte Isolationsteil während eines Betriebs der elektrischen Maschine hauptsächlich auf Druck beansprucht wird. Die Formgebung des Isolationsteils, die durch den komplementären Oberflächenverlauf bestimmt ist, ist in der Lage die auftretenden Axialkräfte und Radialkräfte aufzunehmen.

Über das aus einer Vergussmasse hergestellte Isolationsteil ist sichergestellt, dass über die Lagereinheit kein schädlicher elektrischer Strom fließen kann, so dass keine Elektroerosion stattfinden kann.

Für das Nabenelement kann vorteilhafterweise vorgesehen sein, dass das erste Nabenteil radial innerhalb des zweiten Nabenteils angeordnet ist. Hierdurch wird erreicht, dass eine Haupterstreckungsrichtung des Isolationsteils im Wesentlichen parallel zu der Drehachse A_{D} verläuft.

In einer bevorzugten Ausgestaltung des komplementären Oberflächenverlaufs beider Nabenteile ist dieser als Nut-Feder-Anordnung ausgebildet. Hierbei kann in Abhängigkeit von konstruktiven Rahmenbedingungen entweder vorgesehen sein, dass die Feder auf dem äußeren, ersten Nabenteil und die Nut auf dem inneren, zweiten Nabenteil angeordnet ist. Es kann allerdings auch zweckmäßig sein, dass die Anordnung andersherum getroffen ist, nämlich dass die Nut außen und die Feder innen platziert ist.

In möglichen konkreten Ausgestaltungen des komplementären Oberflächenverlaufs ist dieser derart ausgebildet, dass sich das erste und das zweite Nabenteil aus einer axialen Richtung betrachtet hinterschneiden. Bevorzugt handelt es sich bei der Vergussmasse um ein Zwei-Komponenten-Epoxidharz.

Die Aufgabe wird ferner gelöst durch ein Verfahren zur Herstellung einer Lageranordnung, bei dem ein bzgl. einer Drehachse A_{D} rundes Nabenelement und mit einer sich in axialer Richtung erstreckenden und umfänglich verlaufenden Nut bereitgestellt wird, die Nut mit einer elektrisch isolierenden Vergussmasse zur Bildung eines Isolationsteils ausgegossen wird und ein die Nut axial verschließender Radialsteg über einen materialabtragenden Bearbeitungsprozess entfernt wird, um ein mehrteiliges Nabenelement mit einem durch das Isolationsteile verbundenen ersten und zweiten Nabenteil zu erhalten.

In einer bevorzugten Ausgestaltung wird das Nabenelement über ein Gussverfahren bereitgestellt, wobei das Nabenelement bevorzugt aus Grauguss hergestellt wird.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: exemplarisch und schematisch eine elektrische Maschine,
Fig. 2: eine erfindungsgemäße Ausgestaltung der Lageranordnung für eine elektrische Maschine nach Fig. 1 und
Fig. 3: einen Ablauf zur Herstellung einer Lageranordnung für eine elektrische Maschine nach Fig. 1.

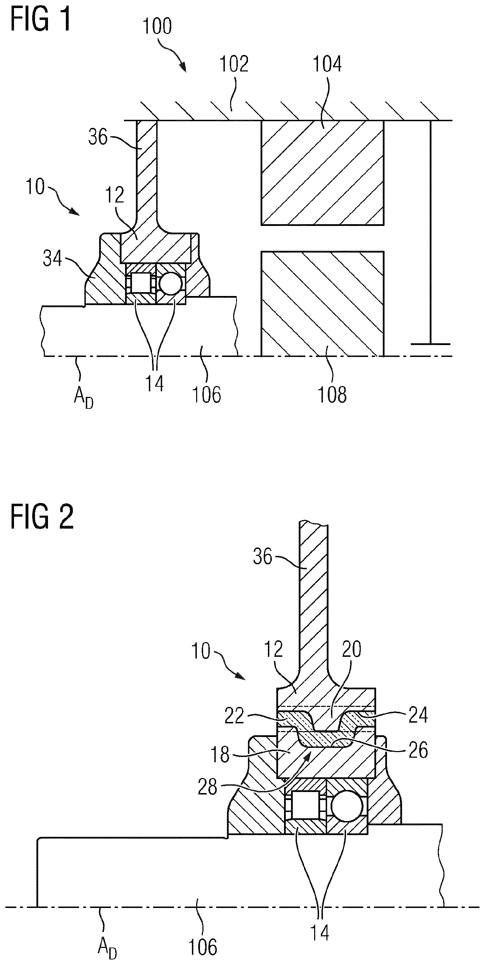

Die Figur 1 zeigt rein exemplarisch eine elektrische Maschine, beispielsweise in Form eines Generators 100, mit einem Gehäuse 102, einem Stator 104 und einem als Rotorwelle ausgeführtem Wellenelement 106 mit einem Rotorläufer 108. Der Rotorläufer 108 ist über eine Lageranordnung 10 in dem Gehäuse 102 drehbar um eine Drehachse A_{D} gelagert.

Die Lageranordnung 10 weist ein Nabenelement 12 auf, in dem eine beispielsweise zwei Wälzlager umfassende Lagereinheit 14 aufgenommen ist. Die Lagereinheit 14 ist zu beiden axialen Seiten jeweils mit einem Lagerdeckel 34, die eine entsprechende Abdichtung gegenüber dem Wellenelement 106 und dem Nabenelement 12 gewährleisten. Das Nabenelement 12 ist vorliegend über eine Lagerschild 36 mit dem Gehäuse 102 verbunden.

Die Figur 2 zeigt eine erfindungsgemäße Ausgestaltung der Lageranordnung 10. Hierbei ist das Nabenelement 12 mehrteilig mit einem radial inneren ersten Nabenteil 18 und einem radial äußeren zweiten Nabenteil 20 ausgeführt. Zwischen dem ersten und dem zweiten Nabenteil 18, 20 ist ein aus einer Vergussmasse hergestelltes elektrisch isolierendes Isolationsteil 22 gehalten. Das Isolationsteil 22 verbindet das erste und das zweite Nabenteil 18, 20 untereinander. Bei der Vergussmasse handelt es sich bevorzugt um ein Zwei-Komponenten-Epoxidharz. Insbesondere können über das Isolationsteil 22 axial und radial wirkende Druckkräfte zwischen dem ersten und das zweiten Nabenteil 18, 20 übertragen werden. Hierzu bilden die einander zugewandten Umfangsflächen 24, 26 des ersten und des zweiten Nabenteils 18, 20 einen zueinander im Wesentlichen komplementären Oberflächenverlauf aus. Der komplementäre Oberflächenverlauf kann, wie vorliegend dargestellt, als Nut-Feder-Anordnung 28 ausgebildet sein. Zudem kann der komplementäre Oberflächenverlauf derart ausgebildet ist, dass sich das erste und das zweite Nabenteil 18, 20 aus einer axialen Richtung betrachtet hinterschneiden.

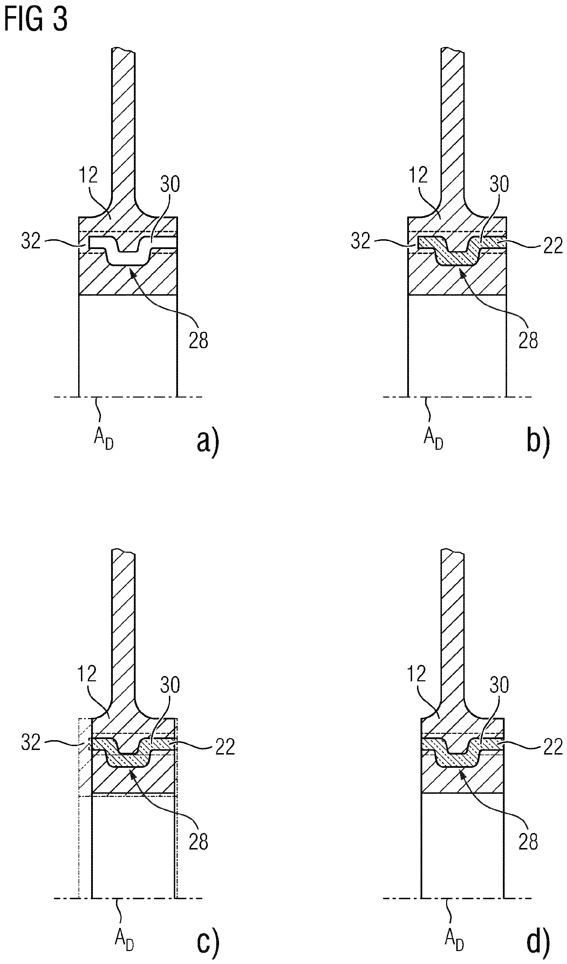

Die Figuren 3a) bis 3d) beschreiben einen Ablauf zur Herstellung einer Lageranordnung 10 mit einem mehrteiligen Nabenelement 12, bei dem ein aus einer Vergussmasse hergestelltes elektrisch isolierendes Isolationsteil 22 das erste und das zweite Nabenteil 18, 20 miteinander verbindet. Es wird ein bzgl. einer Drehachse A_{D} rundes Nabenelement 12 und mit einer sich in axialer Richtung erstreckenden und umfänglich verlaufenden Nut 30 bereitgestellt (Figur 3a). Das Nabenelement 12 liegt noch einteilig vor und zwar indem das spätere erste und zweite Nabenteile mit einem Radialsteg 32 verbunden sind. Der Radialsteg 32 verschließt noch die Nut 30 zur einen axialen Seite hin. Die Nut 30 wird mit einer elektrisch isolierenden Vergussmasse zur Bildung eines Isolationsteils 22 ausgegossen (Figur 3b). Der Radialsteg 32 wird über einen materialabtragenden Bearbeitungsprozess entfernt und es wird ein mehrteiliges Nabenelement 12 mit einem durch das Isolationsteil 22 verbundenen ersten und zweiten Nabenteil 18, 20 erhalten (Figuren 3c und 3d). Durch das Entfernen des Radialstegs 32 wird die elektrische Brücke entfernt und hiernach sind die zwei Nabenteile 18, 20 elektrisch voneinander isoliert. Anschließend erfolgt eine endgültige Bearbeitung des Nabenelements 12 auf die Einbaumaße und ein Zusammenbau der Lageranordnung 10 mit der Lagereinheit 14.

### Bezugszeichenliste

- 10: Lageranordnung
- 12: Nabenelement
- 14: Lagereinheit
- 16: Wellenelement
- 18: Nabenteil
- 20: Nabenteil
- 22: Isolationsteil
- 24: Umfangsfläche
- 26: Umfangsfläche
- 28: Nut-Feder-Anordnung
- 30: Nut
- 32: Radialsteg
- 34: Lagerdeckel
- 36: Lagerschild
- 100: Generator
- 102: Gehäuse
- 104: Stator
- 106: Wellenelement
- 108: Rotorläufer

## Patentansprüche

1. Lageranordnung (10) für einen um eine Drehachse (A_{D}) drehbaren Rotorläufer einer elektrischen Maschine, umfassend
ein Nabenelement (12),
ein über eine Lagereinheit (14) gegenüber dem Nabenelement (12) um die Drehachse (A_{D}) drehbar gehaltenes Wellenelement (16),
wobei das Nabenelement (12) mehrteilig mit einem ersten Nabenteil (18) und einem zweiten Nabenteil (20) ausgeführt ist und ein aus einer Vergussmasse hergestelltes elektrisch isolierendes Isolationsteil (22) das erste und das zweite Nabenteil (18, 20) miteinander verbindet und
wobei einander zugewandte Umfangsflächen (24, 26) des ersten und des zweiten Nabenteils (18, 20) einen zueinander im Wesentlichen komplementären Oberflächenverlauf ausbilden.

2. Lageranordnung (10) nach Anspruch 1, **dadurch gekennzeichnet, dass** das erste Nabenteil (18) radial innerhalb des zweiten Nabenteils (20) angeordnet ist.

3. Lageranordnung (10) nach Anspruch 1 oder 2, **dadurch gekennzeichnet, dass** der komplementäre Oberflächenverlauf als Nut-Feder-Anordnung (28) ausgebildet ist.

4. Lageranordnung (10) nach einem der Ansprüche 1 bis 3, **dadurch gekennzeichnet, dass** der komplementäre Oberflächenverlauf derart ausgebildet ist, dass sich das erste und das zweite Nabenteil (18, 20) aus einer axialen Richtung betrachtet hinterschneiden oder nicht hinterschneiden.

5. Lageranordnung (10) nach einem der Ansprüche 1 bis 4, dass es sich bei der Vergussmasse um ein Zwei-Komponenten-Epoxidharz handelt.

6. Verfahren zur Herstellung einer Lageranordnung (10), bei dem ein bzgl. einer Drehachse A_{D} rundes Nabenelement (12) und mit einer sich in axialer Richtung erstreckenden und umfänglich verlaufenden Nut (30) bereitgestellt wird, die Nut (30) mit einer elektrisch isolierenden Vergussmasse zur Bildung eines Isolationsteils (22) ausgegossen wird und
ein die Nut (30) axial verschließender Radialsteg (32) über einen materialabtragenden Bearbeitungsprozess entfernt wird, um ein mehrteiliges Nabenelement (12) mit einem durch das Isolationsteil (22) verbundenen ersten und zweiten Nabenteil (18, 20) zu erhalten.

7. Verfahren nach Anspruch 6, **dadurch gekennzeichnet, dass** das Nabenelement (12) über ein Gussverfahren bereitgestellt wird.

8. Verfahren nach Anspruch 6 oder 7, **dadurch gekennzeichnet, dass** über das Gussverfahren das Nabenelement (12) aus Grauguss hergestellt wird.
